# EUROPEAN PATENT SPECIFICATION

(11) **EP 0 167 331 B1**
(45) Date of publication and mention of the grant of the patent: **27.01.1993**
(21) Application number: 85304453.5
(22) Date of filing: 21.06.1985
(51) Int. Cl.: H04Q 7/02, H04M 1/72

(54) **Signal transmission apparatus**
Gerät für Signalübertragung
Dispositif pour transmission de signal

(30) Priority: 25.06.1984 JP 129388/84
(43) Date of publication of application: 08.01.1986
(73) Proprietor: SONY CORPORATION, Tokyo 141 (JP)
(72) Inventor: Higashiyama, Mitsuo c/o Patents Division, Shinagawa-ku Tokyo (JP)
(74) Representative: Thomas, Christopher Hugo

(56) References cited:
- EP-A- 0 074 940
- WO-A-83/02380
- US-A- 4 053 717
- US-A- 4 332 981

## Description

This invention relates to signal transmission apparatus, and more particularly is directed to signal transmission apparatus for establishing a selected transmission channel within a multiple channel system for use in, for example, a cordless telephone. The invention also relates to methods of signal transmission.

The radio frequency range of the electromagnetic spectrum is used for transmitting information signals between transmitters and receivers in many different types of communication systems, and is divided into standard frequency ranges which are assigned to the different types of systems to prevent interference between transmissions. Ideally, each transmitter should have its own assigned frequency range, but while the total available radio frequency range is intrinsically limited, the number of systems is not. Instead, the assigned frequency range must somehow be shared by all the transmitters of the system. Frequently the assigned frequency range is itself divided up into a number of transmission channels, but even so there are usually more transmitters than transmission channels, so that the transmission channels themselves must be shared.

A variety of communications systems are presently available which include a plurality of transmitters and a plurality of receivers, each transmitter being able to transmit information signals over any one of several transmission channels, and each receiver being able to receive such information signals transmitted over any of these transmission channels. It is usually intended that each transmitter will establish a transmission channel only with one respective receiver. An example of such a communication system is a cordless telephone system, where, in the USA, for example, a particular frequency range has been assigned by the Federal Communications Commission to all cordless telephones within the system. However, the number of cordless telephones already greatly exceeds the number of available transmission channels.

Therefore, methods have been developed for sharing the available frequency range between the cordless telephones within the system so as to minimize interference. This interference could be in the form of noise from other transmissions or from actual conversations picked up from nearby cordless telephones, each operating over the same transmission channel. Each transmission channel generally includes an audio signal transmission band over which the audio signals will be transmitted once the transmission channel has been established between a particular transmitter and a particular receiver. When no transmitter is transmitting over a particular transmission channel, it is known that the electric field intensity within the corresponding frequency range will be less than a predetermined level. According to one method, then, each transmitter sequentially scans the transmission channels and detects the received electric field intensity at the corresponding frequency ranges to determine whether any of the transmission channels are unoccupied, and selects an unoccupied one for transmission. Once a particular transmission channel has been selected, the audio signal transmission band thereof is used for transmitting an identifying code, uniquely identifying the transmitter to its respective receiver. This identifying code is used by the receiver to establish the transmission channel between itself and the transmitter. Each transmitter/receiver pair has identifying codes uniquely assigned to it by which each component may identify signals transmitted by the other.

Meanwhile, the receiver carries out a conventional polling operation whereby it checks each of the transmission channels to see if the correct identifying code is present. When this is detected, the receiver stops the polling operation and establishes the transmission channel over which it receives the correct identifying code between itself and the transmitter. Thereafter, the receiver is arranged to receive the audio signals from the transmitter over this particular transmission channel.

However, while the audio signal transmission band of the particular transmission channel may be used to transmit the identifying code before the transmission channel is established between the transmitter and receiver, it can no longer be so used once the transmission channel is established and an actual audio signal is being transmitted. In such case, there would be interference between the identifying code and the actual audio signal. On the other hand, if the identifying code is no longer transmitted, there is no way to continue to check that the signal is still being received from the correct transmitter. It would be highly advantageous to continue to transmit the identifying code after the transmission channel has been established.

To remove this defect, it has been proposed to mix the identifying code with the actual audio signal by time division multiplexing, so that the identifying code may be repetitively transmitted to the receiver. The receiver discriminates between the actual audio signal and the identifying code on a time basis. However, this requires that the actual audio signal be periodically interrupted to allow the transmission of the identifying code, which can lead to objectionable results when the audio signal is transformed into sound.

Another proposal is to transmit the identifying code over a separate frequency band, that is frequency division multiplexing. However, if this separate frequency band has a bandwidth equivalent to the standard audio signal transmission band, this will rapidly use up the available bandwidth, reducing the number of available transmission channels. If, on the other hand, only a narrow bandwidth is used for the transmission of the identifying code, then the bit transmission rate for the identifying code is reduced, so that it takes a relatively long time to transmit the identifying signal and thereby to establish the transmission channel between the transmitter and the receiver. See US patent specification US-A-4 053 717.

US patent specification US-A-4 332 981 discloses a cordless telephone system having features similar to those of the pre-characterizing part of claim 1.

According to the present invention there is provided a signal transmission apparatus for establishing a selected transmission channel between a predetermined one of a plurality of transmitters for transmitting information signals including audio signals over any one of a plurality of transmission channels in a communications system, and a predetermined one of a plurality of receivers for receiving said information signals transmitted over any of said transmission channels, each of said transmission channels having a respective total frequency range including an allocated range for transmitting said audio signals, said apparatus comprising:
means at the predetermined transmitter for selecting one of said transmission channels; and
means for transmitting at least a control signal indicative of the identity of said predetermined transmitter over the selected transmission channel;
the predetermined receiver including means for establishing the selected transmission channel between it and said predetermined transmitter only in response to the receipt of said transmitted control signal identifying said predetermined transmitter;
characterized by:
said means for transmitting initially transmitting said control signal by using substantially all of the allocated range of said selected transmission channel;
means at said predetermined receiver for confirming that said selected transmission channel has been established with said predetermined receiver and for generating and transmitting a confirmation output using substantially all of said allocated range;
said predetermined transmitter being responsive to said confirmation output for transmitting said audio signals by using a first portion of said allocated range; and
said transmitting means and said confirming means both transmitting control signals therebetween using a second portion of said allocated range separate from said first portion, after the transmission has been established.

According to the invention there is also provided in a communications system having a plurality of transmitters for transmitting information signals including audio signals over any one of a plurality of transmission channels, and further having a plurality of receivers for receiving said information signals transmitted over any of said transmission channels, each of said transmission channels having a respective total frequency range including an allocated range for transmitting said audio signals;
a method for establishing a selected transmission channel between a predetermined one of said transmitters and a predetermined one of said receivers, comprising the steps of:
selecting at the predetermined transmitter, one of said transmission channels; and
transmitting at least a control signal indicative of the identity of said predetermined transmitter over the selected transmission channel;
the predetermined receiver establishing the selected transmission channel between it and said predetermined transmitter only in response to the receipt of said transmitted control signal identifying said predetermined transmitter;
characterized by the further steps of:
said predetermined transmitter initially transmitting said control signal by using substantially all of the allocated range of said selected transmission channel;
said predetermined receiver confirming that said selected transmission channel has been established with said predetermined receiver and generating and transmitting a confirmation output using substantially all of said allocated range;
said predetermined transmitter responding to said confirmation output by transmitting said audio signals using a first portion of said allocated range; and
said predetermined transmitter and receiver both transmitting control signals therebetween using a second portion of said allocated range separate from said first portion, after the transmission has been established.

The invention will now be described by way of example with reference to the accompanying drawings, throughout which like parts are referred to by like references, and in which:
Figure 1 is a schematic diagram illustrating receivers and transmitters of a communications system wherein an embodiment of signal transmission apparatus according to the present invention may advantageously be utilized;
Figure 2A is a frequency spectrum plot illustrating the frequencies used for transmitting an identifying code prior to the establishment of a transmission channel with a receiver;
Figure 2B is a frequency spectrum plot illustrating the frequencies used for transmitting the identifying code and an actual audio signal after the transmission channel has been established;
Figure 3 is a block diagram of a base unit of a cordless telephone incorporating signal transmission apparatus according to the present invention;
Figure 4 is a block diagram of a handset unit of the cordless telephone of Figure 3;
Figure 5 is a flowchart of the operation of the base unit of Figure 3; and
Figure 6 is a flowchart of the operation of the handset unit of Figure 4.

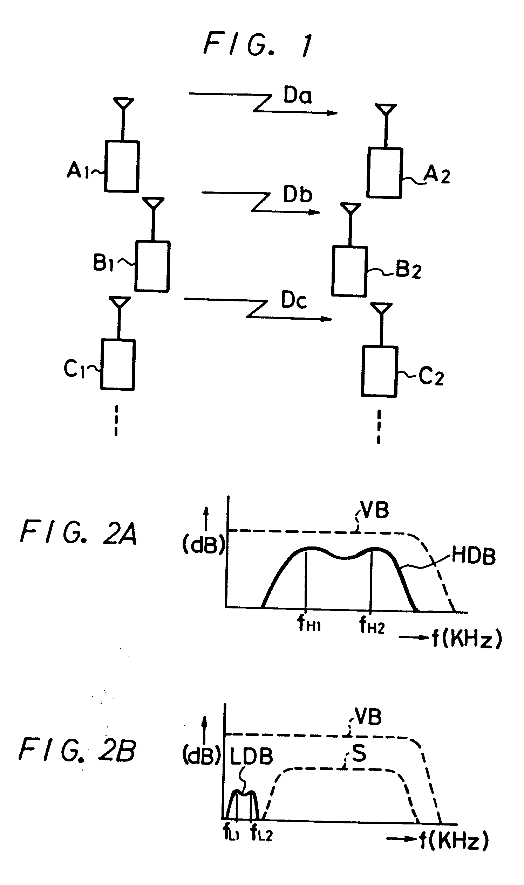

Referring initially to Figure 1, a communications system of the type advantageously utilizing an embodiment of signal transmission apparatus according to the present invention has a plurality of transmitters A₁, B₁, C₁ and a plurality of receivers A₂, B₂, C₂. The transmitter A₁ is intended to communicate only with the receiver A₂, the transmitter B₁ with the receiver B₂, and the transmitter C₁ with the receiver C₂, respectively. However, all the transmitter/receiver pairs share a single frequency range over which signals may be transmitted, and this frequency range is divided into a plurality of transmission channels, f₁, f₂, ... fₙ. It is contemplated that the total number of transmitter/receiver pairs exceeds the number of available transmission channels, so that they must share the transmission channels. Only one transmitter/receiver pair is to use any particular transmission channel at a time.

Each transmitter/receiver pair has associated therewith a unique identifying code, provided as a string of binary digits. Thus, the transmitter/receiver pair A₁, A₂ has an identifying code Dₐ, the transmitter/receiver pair B₁, B₂ has an identifying code D_{b}, and the transmitter/receiver pair C₁, C₂ has an identifying code D_{c}. The identifying codes Dₐ, D_{b} and D_{c} are used by the respective transmitter/receiver pairs to ensure that, for example, the receiver A₂ will receive signals only from the transmitter A₁, as will be described below.

The manner in which the transmitter/receiver pairs share the transmission channels is as follows. It should be understood in the discussion below that each of the transmitters A₁, B₁ and C₁ is capable of transmitting signals over any one of the transmission channels at a time. Suppose now that the transmitter A₁ is to transmit signals which the receiver A₂ alone is to receive. The transmitter A₁ begins this process by sequentially scanning the available transmission channels beginning from a predetermined transmission channel to determine whether any is unoccupied, that is not being used by any of the remaining transmitters in the communications system. This is done by detecting the intensity of the electrical field in the frequency range corresponding to each transmission channel. If the transmission channel is not being used, the electric field intensity will be less than a predetermined level. The electric field intensity could be high due to the fact that one of the other transmitters, for example, the transmitter B₁, is transmitting over this transmission channel, or due to some external signal totally unrelated to the particular communication system. In any event, if the electric field intensity is above the predetermined level, this of itself would create significant interference with any signals broadcast over the transmission channel at these frequencies, and so the transmission channel is not selected.

Once a transmission channel has been located where the electric field intensity is less than the predetermined level, this transmission channel, for example, f₁, is selected. Then the transmitter A₁ uses the audio signal transmission band VB (Figure 2A), allocated for the transmission of the audio signals and ranging from 0 to 4 KHz, to transmit the identifying code Dₐ as a control signal. This control signal may advantageously be generated by minimum shift key (MSK) modulation of the binary identifying code, as illustrated in Figure 2A. When the frequencies f_{H1} and f_{H2} for the MSK modulation are chosen to be 1200 Hz and 1800 Hz, respectively, as illustrated, the resultant wide band MSK signal HDB occupies frequencies from 600 to 2400 Hz, that is, substantially the entire audio signal transmission band VB. Accordingly, since the bit transmission rate is proportional to bandwidth, the identifying code Dₐ can be transmitted at a fast bit transmission rate of up to 1200 bits per second (bps). Thus, the entire identifying code Dₐ can be transmitted over the transmission channel f₁ in a very short time.

Meanwhile, the receiver A₂ is sequentially searching the available transmission channels in the conventional polling operation, looking for a transmission channel in which the proper identifying code is present. If the transmitter A₁ were not transmitting at all, the identifying code Dₐ would not be found in any of the transmission channels, and so no transmission channel would be established. In the present case, it is assumed that the transmitter A₁ has selected the transmission channel f₁ and the identifying code Dₐ appears therein. The receiver A₂ is responsive to the receipt of this correct identifying code Dₐ to stop its searching operation and to establish the transmission channel f₁, using the frequencies thereof as its operating frequencies.

During this time, the identifying code Dₐ is repeatedly transmitted by the transmitter A₁. After sufficient time has elapsed for the receiver A₂ to scan through all the transmission channels, to identify the received identifying code as the correct identifying code Dₐ, and to establish the transmission channel f₁, the transmitter A₁ stops transmitting the identifying code Dₐ over the wide band HDB. The elapsed time may simply be measured, or, as in the preferred embodiment described below, the receiver A₂ may retransmit a second control signal to indicate that the transmission channel f₁ has been established. In either case, the transmitter A₁ then transmits the identifying code Dₐ by using only a narrow band signal LDB, as illustrated in Figure 2B. The narrow band signal LDB extends from 60 to 240 Hz within the audio signal transmission band VB, but is separate from a transmission band S used by the transmitter A₁ for transmitting the actual audio signal once the transmission channel f₁ has been established. In the illustrated embodiment, when the narrow band signal LDB is generated by MSK modulation of the identifying code Dₐ using f_{L1} at 120 Hz and f_{L2} at 180 Hz, the bit transmission rate is 120 bps. The audio signal, however, lies in the transmission band S from approximately 300 to 3400 Hz.

In this manner, once the transmission channel f₁ has been established between the transmitter A₁ and the receiver A₂, both the actual audio signal and the identifying code Dₐ are transmitted. Thus, it is possible to continue to confirm that the received signal was in fact transmitted from the transmitter A₁, and not from another transmitter.

Furthermore, while the bit transmission rate for the identifying code Dₐ is initially high so that the transmission channel f₁ can be quickly established, the bit transmission rate is relatively low after the transmission channel f₁ has been established. Since the identifying code Dₐ is now used only to confirm that the transmitter A₁ is transmitting the audio signal received at the receiver A₂, the low bit transmission rate is sufficient.

Thus an embodiment of the present invention can form a signal transmission apparatus which eliminates the above-described difficulties of the earlier apparatus. The transmission channel is established quickly by the rapid transmission of the identifying code by using substantially the entire audio signal transmission band. Furthermore, once the transmission channel has been established, the identifying code continues to be transmitted, but using only a relatively narrow band of the audio signal transmission band, while the greater part of this band is now utilized for the transmission of the actual audio signal. The frequency range for transmitting the identifying code lies outside of and is separate from the frequency range used to transmit the actual audio signal, so that there is no interference between the two. However, both HDB and LDB lie within the audio signal transmission band, so that extra bandwidth to transmit control signals is not required. Furthermore, there is no need to time multiplex the two signals, so that the actual audio signal need not be interrupted.

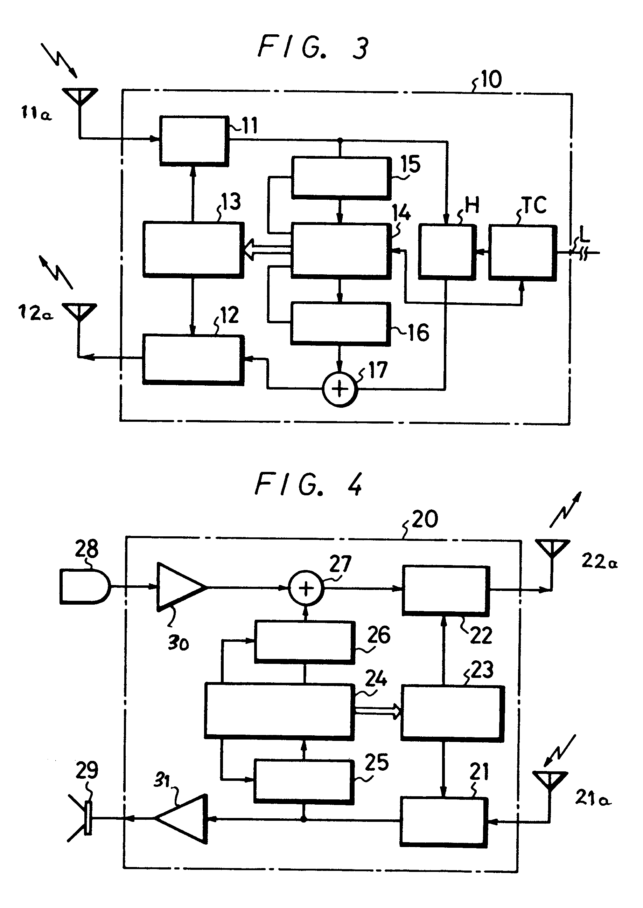

So far the theoretrical function and operation of the embodiment of signal transmission apparatus according to the present invention have been described in detail, but without application to a particular communications system. However, there are a variety of communications systems in which such signal transmission apparatus may advantageously be employed. One example of such a communications system is a cordless telephone system, illustrated in Figures 3 and 4. Of course, it will be understood that a signal transmission apparatus according to the present invention could advantageously be used in a variety of different communications systems.

Heretofore each transmission channel has been described as having one particular range of frequencies. However, in cordless telephones such as the one described in connection with Figures 3 and 4, each transmission channel is in fact a duplex transmission channel, having upper and lower sub-channels. Conventionally, the base unit of the cordless telephone will transmit over a first sub-channel and receive over the second sub-channel, while the handset unit will transmit over the second sub-channel and receiver over the first sub-channel.

Referring now to Figure 3, a base unit 10 of one cordless telephone in the system includes a receiver 11 connected to an antenna 11a for receiving signals transmitted over the transmission channels. A transmitter 12 is connected to an antenna 12a. The base unit 10 also includes a synthesizing oscillator 13, which operates as a local oscillator supplying local oscillation signals to the receiver 11 and the transmitter 12 for determining the receiving frequency and the transmitting frequency thereof, respectively. The base unit 10 includes a control section 14, which may advantageously be embodied in a suitably programmed microcomputer or microprocessor. One advantageous example of a suitable microprocessor is the MSM6404, supplied by Oki Electric Industry Company Limited of Japan. The base unit 10 further includes a demodulator 15, a modulator 16, an adding circuit 17, and other known elements forming a conventional base unit 10 for a cordless telephone. A telephone terminal section TC is connected to a telephone network line L for receiving and transmitting telephone message signals therethrough and is also connected to a hybrid circuit H. The hybrid circuit H conventionally contains both solid state elements and moving relays for connecting the internal elements of the base unit 10 with the external telephone network line L. As necessary, the hybrid circuit H interchanges the transmission and reception of signals between two and four lines.

The other unit of the cordless telephone is a handset unit 20, illustrated in Figure 4. The handset unit 20 contains many elements corresponding in function to those of the base unit 10, in particular a receiver 21, an antenna 21a, a transmitter 22, an antenna 22a, a synthesizing oscillator 23, a control section 24, a demodulator 25, a modulator 26, and an adding circuit 27. Since the handset unit 20 is used as the telephone receiver for conversation, it further includes a microphone 28 fed by an amplifier 30, to convert the user's voice into electric signals, and a loudspeaker 29 fed by an amplifier 31, to reproduce the caller's voice.

The operation of the base unit 10 and the handset unit 20 when an incoming call is received will now be described. When an incoming call appears on the telephone network line L, a call signal is supplied from the telephone terminal section TC to the control section 14. The control section 14 thereupon supplies a control signal to the synthesizing oscillator 13 to cause it to vary the operating frequency of the receiver 1 so that it will carry out the conventional search operation beginning from an arbitrarily predetermined transmission channel, as described above, to detect and identity an unoccupied transmission channel of the several transmission channels available to the base unit 10. If an unoccupied transmission channel f₁ is detected, the synthesizing oscillator 13 is controlled by the control section 14 so as to set the frequency of the first sub-channel of the transmission channel f₁ as the transmission frequency for the transmitter 12 and the frequency of the second sub-channel as the receiving frequency for the receiver 12. The transmission channel f₁ is also set for the modulator 16 and the demodulator 15. An identifying code ID uniquely assigned to the base unit 10 is stored in the control section 14. Advantageously, this may be the telephone number of the cordless telephone itself. The identifying code ID is read from the control section 14 and supplied to the modulator 16, wherein it is MSK modulated to become the wide band signal HDB occupying substantially the entire audio signal transmission band VB, as shown in Figure 2A, and is supplied through the adding circuit 17 to the transmitter 12. Because the identifying code ID has been modulated to occupy the relatively large bandwidth of the entire audio signal transmission band VB, it may be transmitted at a high bit transmission rate to the handset unit 20.

Referring now to Figure 4, the handset unit 20 conventionally includes an ON/OFF control (not illustrated) for enabling and disabling it, respectively, to receive transmitted signals. When the handset unit 20 is enabled, it repeatedly performs the polling operation, described above, to determine whether the appropriate identifying code ID is being transmitted over any of the transmission channels. In the present circumstance, the base unit 10 is in fact transmitting the appropriate identifying code ID, which is received by the receiver 21, and supplied through the demodulator 25 to the control section 24. In the control section 24, the received identifying code ID is checked for identity with a stored identifying code ID'. If they are identical, the control section 24 provides a control signal to the synthesizing oscillator 23 to set the receiving frequency of the receiver 21 at the frequency of the first sub-channel of the transmission channel f₁ over which the identifying code ID was received, that is the transmission channel selected by the base unit 10. The synthesizing oscillator 23 similarly provides a control signal to the transmitter 22 to set its transmission frequency as that of the second sub-channel of the selected transmission channel f₁. Further, the control section 24 also supplies control signals to set the modulator 26 and the demodulator 25. This process is referred to herein as establishing the selected transmission channel.

At this time, the identifying code ID' stored in the control section 24 is supplied to the modulator 26, wherein it is MSK modulated using substantially the entire audio signal transmission band VB, in the same way as the identifying code ID in the base unit 10, and then is supplied through the adding circuit 27 to the transmitter 22, by which it is transmitted for a predetermined interval at a high bit transmission rate to the base unit 10. The retransmission of the identifying code ID' stored in the handset unit 20 provides an additional check to ascertain that the proper base unit 10 will be communicating with its respective handset unit 20.

The retransmitted identifying code ID' is received by the base unit 10 at the receiver 11, demodulated by the demodulator 15, and supplied to the control section 14. The predetermined interval during which the identifying code ID' is transmitted is made long enough to allow the receiver 11 to receive it with certainty. If in fact the received identifying code ID' is the same as the stored identifying code ID, the control section 14 supplies a control signal to the telephone terminal section TC to cause a connection with the telephone network line L whereby the telephone message signals may now be supplied through the telephone terminal section TC to the hybrid circuit H. The hybrid circuit H then supplies the telephone message signals to the adding circuit 17. The control section 14 also supplies a control signal to the modulator 16 to change the modulating frequencies creating the MSK modulated signal from f_{H1}, f_{H2} to f_{L1}, f_{L2}, so that the MSK modulated signal no longer occupies substantially the entire audio signal transmission band VB, as illustrated in Figure 2A, but rather occupies the significantly narrower transmission band of signal LDB, illustrated in Figure 2B. The actual audio signal, that is the telephone message signal, on the other hand, occupies the wide band transmission band S of Figure 2B. The MSK modulated signal LDB from the modulator 16 and the telephone message signal from the hybrid circuit H are combined in the adding circuit 17 and are then supplied to the transmitter 12 for transmission to the handset unit 20.

When the base unit 10 receives the identifying code ID' over the second sub-channel of the transmission channel f₁ selected by the control section 14 for transmission, and when the control section 14 has determined that the received identifying code ID' is the same as the stored identifying code ID, this confirms that the transmission channel f₁ has been established between the base unit 10 and its paired handset unit 20. The control signal supplied by the control section 14 to the modulator 16 and the telephone terminal second TC as a consequence of this confirmation may be regarded as a confirmation output. The modulator 16 is responsive to this confirmation output to change the modulating frequencies to produce the narrow band signal LDB. The telephone terminal section TC is responsive to the confirmation output to connect the telephone network line L to the hybrid H to enable the transmission therethrough of the telephone message signals.

The handset unit 20 receives the combined signal at the receiver 21 and supplies it through the amplifier 31 to the loudspeaker 29. The loudspeaker 29 is arranged to reproduce the actual audio signal so as to simulate the caller's voice. Meanwhile, the combined signal from the receiver 21 is also supplied to the demodulator 25, which demodulates the signal LDB containing the identifying code ID and supplies it to the control section 24. Thus, a continuing check of the identifying code ID may be performed. Similarly, electric signals corresponding to the user's voice are produced by the microphone 28 and supplied through the amplifier 30 to the adding circuit 27. The identifying code ID' is supplied to the modulator 26, which also produces the narrow band MSK signal LDB at a low bit transmission rate. The two signals are combined in the adding circuit 27 and supplied to the transmitter 22 for transmission to the base unit 10. In the base unit 10, the combined signals are received at the receiver 11 and processed in a similar manner.

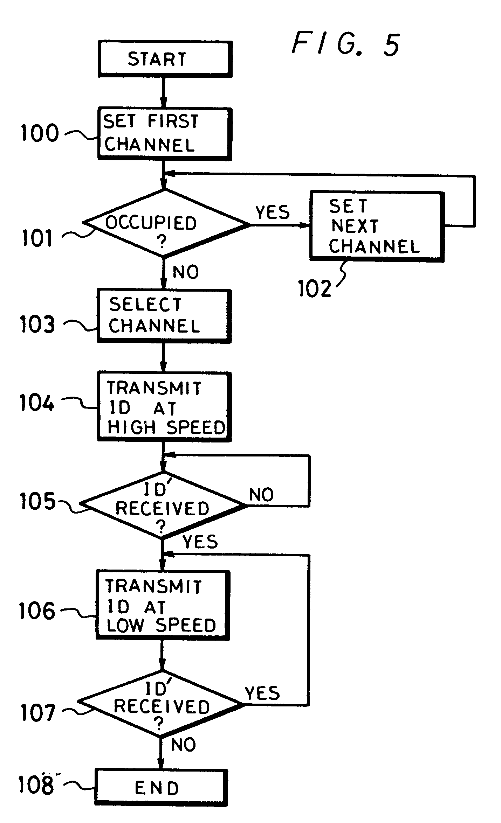

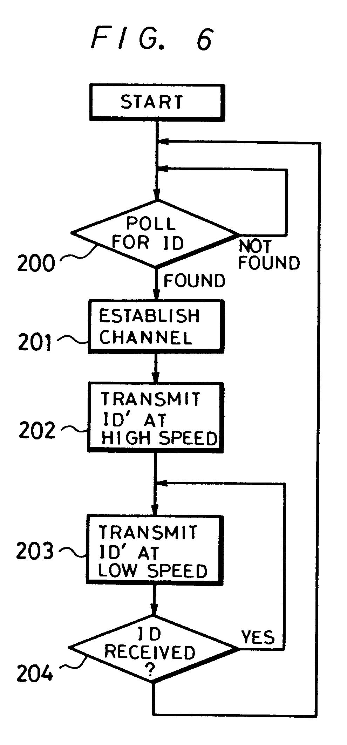

The operations of the base unit 10 and the handset unit 20, under the control of the control sections 14 and 24, respectively, are illustrated in Figures 5 and 6. Referring first to Figure 5, which is a flowchart of the operation of the base unit 10, when an incoming telephone call appears on the telephone network line L and the call signal is transmitted, the control section 14 loads a routine which begins in step 100, wherein an arbitrary predetermined transmission channel is selected to begin the scanning operation. Whether this channel is occupied is detected in step 101, and if it is, the next transmission channel is selected in step 102 and the routine returns to the step 101. Upon the detection of an unoccupied transmission channel, the routine moves to step 103, wherein the modulator 16, the demodulator 15, the transmitter 11 and the receiver 12 are set in response to control signals from the control section 14, and in step 104 the identifying code ID is transmitted at the high bit transmission rate, using the wide band signal HDB occupying substantially all of the audio signal transmission band. In step 105, it is checked whether or not the identifying code ID' has been retransmitted back from the handset unit 20, and this check continues until the identifying code ID' is detected. Once it has been detected, indicating that the selected transmission channel f₁ has been established, the identifying code ID is transmitted at the low bit transmission rate, using the narrow band signal LDB. The identifying code ID is transmitted repeatedly as long as the identifying code ID' continues to be received from the handset 20 which is checked in step 107. When in the step 107 it has been determined that the identifying code ID' is no longer being received, it is decided that communication has ended and the routine ends in step 108.

Figure 6 illustrates the corresponding operation of the handset unit 20. When the handset unit 20 is enabled, the control section 24 begins a sub-routine in step 200, wherein the conventional polling operation is conducted. The channels are sequentially searched to determine if the proper identifying code appears therein. The routine continues to return to the step 200 until the proper identifying code ID is located, that is in the selected transmission channel f₁, at which point the routine proceeds to step 201, wherein the selected transmission channel f₁ is established. Then in step 202, the identifying code ID' is retransmitted for a predetermined interval at the high bit transmission rate to the base unit 10 for confirmation that the transmission channel f₁ has been established. In step 203, the identifying code ID' is repetitively transmitted at the low bit transmission rate, while in step 204 it is repetitively checked whether or not the identifying code ID from the base unit 10 is still being received. Thus the steps 203 and 204 within the control section 24 correspond to the steps 106 and 107 within the control section 14. However, if in the step 204 it is determined that the identifying code ID from the base unit 10 is not found, and so the end of the communication is detected, the routine does not end, but rather returns to the step 200 to once again begin the polling operation. Thus, the handset unit 10 remains enabled to receive the next transmission.

Since the identifying codes ID and ID' continue to be exchanged between the base unit 10 and the handset unit 20 over the narrow band signal LDB, it is possible to detect when other radio frequency transmissios create interference, because such transmissions will not contain the appropriate identifying code. Counter-measures may then be taken to remove the problems caused by the interference. One appropriate counter-measure would be for the control section 14 to begin the calling routine once again to scan for an available, interference-free transmission channel. It will be recalled that such unoccupied channels are detected by the low level of the electric field intensity. Whether this electric field intensity is being raised by another cordless telephone using the frequency of the particular transmission channel, or by any other source, the raised electric field intensity can be measured and a transmission channel in this frequency range can be avoided. Alternatively, the control sections 14 and 24 could be arranged upon the detection of the interference simply to switch to another transmission channel, in a predetermined fashion, without going through the entire calling routine.

An additional advantageous feature is that when one or the other of the base unit 10 and the handset unit 20 is disabled to stop communication, the transmission of the identifying code always stops. It may happen that due to an error in the system, the conventional call end signal is not transmitted or detected. However, it is straightforward to detect the absence of the identifying code for a predefined length of time, and this absence can be used itself as the communication end signal, so it is possible positively to detect the termination of communication and thereby positively to disconnect the telephone network line L from the telephone terminal section TC. In this way, the base unit 10 will not appear to be in use when in fact it is not, so that erroneous busy signals will not be generated and incoming telephone calls may be received.

A still further advantageous feature is that the frequency band of the signal LDB used for transmitting the identifying code may be used to transmit other information. For example, if a first telephone call has been received and the base unit 10 and the handset unit 20 are in communication, and then a second incoming call appears on the telephone network line L, it is possible to send an indication thereof over this band to the handset 20 to create a "call waiting" signal. A second additional use of this band would be to transmit the above-mentioned call end signal.

In the above described embodiment of the signal transmission apparatus according to the present invention as embodied in the cordless telephone of Figures 3 and 4, it has been assumed that the identifying code ID stored in the control section 14 and the identifying code ID' stored in the control section 24 are the same. However, this is not necessary. If the control section 14 stores an identifying code uniquely identifying the base unit 10, and the control section 24 stores an identifying code uniquely identifying the handset 20, the control sections 14 and 24 may be arranged to recognize the corresponding identifying codes from the control sections 24 and 14, respectively.

Additionally, in the above described embodiment, the narrow band signal LDB was generated by MSK modulation. It will be understood that other types of modulation are frequency shift keying (FSK) and phase shift keying (PSK), of which minimum shift keying is a variation. Other modulations systems may be utilized, so long as they provide a wide band modulated signal for fast bit transmission before the transmission channel is established, and a narrow band modulated signal for bit transmission at a low rate afterwards.

In addition, the narrow band signal LDB in which the identifying code is transmitted after the transmission channel has been established need not be located at the low frequency end of the audio signal transmission band, but may alternatively be provided at the high frequency end.

Finally, the communications system might be designed so that one transmitter could communicate with a specified plurality of receivers. For example, in a cordless telephone system, one base unit could have two or more handset units associated therewith. The signal transmission apparatus according to the present invention could readily be adapted to establish a transmission channel only between these component.

## Claims

1. A signal transmission apparatus for establishing a selected transmission channel between a predetermined one of a plurality of transmitters (A₁, B₁, C₁) for transmitting information signals including audio signals over any one of a plurality of transmission channels in a communications system, and a predetermined one of a plurality of receivers (A₂, B₂, C₂) for receiving said information signals transmitted over any of said transmission channels, each of said transmission channels having a respective total frequency range including an allocated range for transmitting said audio signals, said apparatus comprising:
means (14) at the predetermined transmitter (A₁, B₁, C₁) for selecting one of said transmission channels; and
means (16, 17, 12) for transmitting at least a control signal indicative of the identity of said predetermined transmitter (A₁, B₁, C₁) over the selected transmission channel;
the predetermined receiver (A₂, B₂, C₂) including means (24) for establishing the selected transmission channel between it and said predetermined transmitter (A₁, B₁, C₁) only in response to the receipt of said transmitted control signal identifying said predetermined transmitter (A₁, B₁, C₁);
characterized by:
said means (16, 17, 12) for transmitting initially transmitting said control signal by using substantially all of the allocated range of said selected transmission channel;
means (26, 27, 22) at said predetermined receiver (A₂, B₂, C₂) for confirming that said selected transmission channel has been established with said predetermined receiver (A₂, B₂, C₂) and for generating and transmitting a confirmation output using substantially all of said allocated range;
said predetermined transmitter (A₁, B₁, C₁) being responsive to said confirmation output for transmitting said audio signals by using a first portion of said allocated range; and
said transmitting means (16, 17, 12) and said confirming means (26, 27, 22) both transmitting control signals therebetween using a second portion of said allocated range separate from said first portion, after the transmission has been established.

2. Apparatus according to claim 1 wherein said means (14) for selecting includes means (13) for sequentially scanning said plurality of transmission channels and for detecting a received electric field intensity within each said transmission channel, said means (14) for selecting selecting a transmission channel having a received electric field intensity lower than a predetermined level.

3. Apparatus according to claim 1 wherein said control signal is an identifying code uniquely assigned to said predetermined transmitter (A₁, B₁, C₁).

4. Apparatus according to claim 3 wherein said means (24) for establishing includes means (26, 27, 22) for retransmitting a second control signal during a predetermined interval by using substantially all of said allocated range.

5. Apparatus according to claim 4 wherein said second control signal is an identifying code uniquely assigned to said predetermined receiver (A₂, B₂, C₂).

6. Apparatus according to claim 1 wherein said second portion of said allocated range for transmitting said control signal subsequent to confirmation is a narrow band frequency range within said allocated range.

7. Apparatus according to claim 6 wherein said second portion of said allocated range is a low frequency band of said allocated range.

8. Apparatus according to any one of the preceding claims wherein said communications system is a cordless telephone system, each said transmitter (A₁, B₁, C₁) being a base unit (10) of a respective cordless telephone and each said receiver (A₂, B₂, C₂) being handset unit (20) of said respective cordless telephone.

9. Apparatus according to claim 8 wherein said control signal is a telephone number uniquely assigned to said predetermined transmitter (A₁, B₁, C₁) and receiver (A₂, B₂, C₂).

10. Apparatus according to claim 1 wherein said means (16, 17, 12) for transmitting includes modulating means (16) supplied with said confirmation output for generating a modulated signal in response to said control signal having a first bandwidth equal to substantially all of said allocated range in the absence of said confirmation output, and having a second bandwidth equal to said second portion of said allocated range in the presence of said confirmation output.

11. Apparatus according to claim 10 wherein said second portion of said allocated range is a narrow band frequency range within said allocated range.

12. Apparatus according to claim 10 wherein said control signal is a binary signal, and wherein said modulating means (16) includes means for minimum shift key modulating a reference signal in response to said control signal.

13. Apparatus according to claim 1 wherein said means (24) for establishing includes means (23) for polling said transmission channels to detect if a control signal is present therein and for determining whether a received control signal is indicative of the identity of said predetermined transmitter, and means (24, 26, 27, 22) for transmitting a second control signal indicative of the establishment of said selected transmission channel over said selected transmission channel in response to said determination.

14. Apparatus according to claim 13 wherein said means (24) for establishing includes means for comparing said received control signal with a reference control signal.

15. Apparatus according to claim 14 wherein said means (26, 27, 22) for confirming includes means for detecting said second control signal transmitted over said selected transmission channel.

16. In a communications system having a plurality of transmitters (A₁, B₁, C₁) for transmitting information signals including audio signals over any one of a plurality of transmission channels, and further having a plurality of receivers (A₂, B₂, C₂) for receiving said information signals transmitted over any of said transmission channels, each of said transmission channels having a respective total frequency range including an allocated range for transmitting said audio signals;
a method for establishing a selected transmission channel between a predetermined one of said transmitters (A₁, B₁, C₁) and a predetermined one of said receivers (A₂, B₂, C₂), comprising the steps of:
selecting at the predetermined transmitter (A₁, B₁, C₁), one of said transmission channels; and
transmitting at least a control signal indicative of the identity of said predetermined transmitter (A₁, B₁, C₁) over the selected transmission channel;
the predetermined receiver (A₂, B₂, C₂) establishing the selected transmission channel between it and said predetermined transmitter (A₁, B₁, C₁) only in response to the receipt of said transmitted control signal identifying said predetermined transmitter (A₁, B₁, C₁);
characterized by the further steps of:
said predetermined transmitter (A₁, B₁, C₁) initially transmitting said control signal by using substantially all of the allocated range of said selected transmission channel;
said predetermined receiver (A₂, B₂, C₂) confirming that said selected transmission channel has been established with said predetermined receiver (A₂, B₂, C₂) and generating and transmitting a confirmation output using substantially all of said allocated range;
said predetermined transmitter (A₁, B₁, C₁) responding to said confirmation output by transmitting said audio signals using a first portion of said allocated range; and
said predetermined transmitter and receiver (A₁, A₂, A₃; B₁, B₂, B₃) both transmitting control signals therebetween using a second portion of said allocated range separate from said first portion, after the transmission has been established.

## Patentansprüche

1. Gerät für Signalübertragung zum Herstellen eines ausgewählten Übertragungskanals zwischen einem vorbestimmten einer Vielzahl von Sendeeinrichtungen (A₁, B₁, C₁) zum Senden von Informationssignalen, die Audiosignale enthalten, über irgendeinen einer Vielzahl von Übertragungskanälen in einem Kommunikationssystem und einer vorbestimmten einer Vielzahl von Emfangseinrichtungen (A₂, B₂, C₂) zum Empfangen der Informationssignale, die über irgendeinen der Übertragungskanäle übertragen sind, wobei jeder der Übertragungskanäle einen betreffenden Gessamtfrequenzbereich hat, der einen zugewiesenen Bereich zum Übertragen der Audiosignale enthält, welches Gerät umfaßt:
ein Mittel (14) bei der vorbestimmten Sendeeinrichtung (A₁, B₁, C₁) zum Auswählen eines der Übertragungskanäle und
Mittel (16, 17, 12) zum Übertragen zumindest eines Steuersignals, das bezeichnend für die Identität der vorbestimmten Sendeeinrichtung (A₁, B₁, C₁) ist, über den ausgewählten Übertragungskanal,
wobei die vorbestimmte Empfangseinrichtung (A₂, B₂, C₂) ein Mittel (24) zum Herstellen des ausgewählten Übertragungskanals zwischen sich und der vorbestimmten Sendeeinrichtung (A₁, B₁, C₁) nur in Reaktion auf den Empfang des übertragenen Steuersignals, das die vorbestimmte Sendeeinrichtung (A₁, B₁, C₁) identifiziert, enthält,
**gekennzeichnet**
dadurch, daß die Mittel (16, 17, 12) zum Übertragen anfänglich das Steuersignal durch Benutzen im wesentlichen der Gesamtheit des zugewiesenen Bereichs des ausgewählten Übertragungskanals übertragen,
durch Mittel (26, 27, 22) bei der vorbestimmten Empfangseinrichtung (A2, B2, C2) zum Bestätigen, daß der ausgewählte Übertragungskanal mit der vorbestimmten Empfangseinrichtung (A₂, B₂, C₂) hergestellt worden ist, und zum Erzeugen und Übertragen eines Bestätigungs-Ausgangssignals, das im wesentlichen die Gesamtheit des zugewiesenen Bereichs benutzt,
dadurch, daß die vorbestimmte Sendeeinrichtung (A₁, B₁, C₁) auf das Bestätigungs-Ausgangssignal zum Übertragen der Audiosignale durch Benutzen eines ersten Teils des zugewiesenen Bereichs anspricht, und
dadurch, daß die Mittel (16, 17, 12) zum Übertragen und die Mittel zum Bestätigen (26, 27, 22) jeweils Steuersignale zwischen sich unter Benutzung eines zweiten Teils des zugewiesenen Bereichs, der von dem ersten Teil getrennt ist, übertragen, nachdem die Übertragungsstrecke hergestellt worden ist.

2. Gerät nach Anspruch 1, bei dem das Mittel (14) zum Auswählen ein Mittel (13) zum sequentiellen Abtasten der Vielzahl von Übertragungskanälen und zum Erfassen einer elektrischen Feldstärke innerhalb jedes der Übertragungskanäle enthält, wobei das Mittel (14) zum Auswählen einen Übertragungskanal auswählt, der eine empfangene elektrische Feldstärke hat, die niedriger als ein vorbestimmter Pegel ist.

3. Gerät nach Anspruch 1, bei dem das Steuersignal ein Identifizierungscode ist, der allein der vorbestimmten Sendeeinrichtung (A₁, B₁, C₁) zugeteilt ist.

4. Gerät nach Anspruch 3, bei dem das Mittel (24) zum Herstellen Mittel (26, 27, 22) zum Rückübertragen eines zweiten Steuersignals während eines vorbestimmten Intervalls durch Benutzen im wesentlichen der Gesamtheit des zugewiesenen Bereichs enthält.

5. Gerät nach Anspruch 4, bei dem das zweite Steuersignal ein Identifizierungscode ist, der allein der vorbestimmten Empfangseinrichtung (A₂, B₂, C₂) zugeteilt ist.

6. Gerät nach Anspruch 1, bei dem der zweite Teil des zugewiesenen Bereichs zum Übertragen des Steuersignals folgend auf die Bestätigung ein Schmalband-Frequenzbereich innerhalb des zugewiesenen Bereichs ist.

7. Gerät nach Anspruch 6, bei dem der zweite Teil des zugewiesenen Bereichs ein Niederfrequenzband des zugewiesenen Bereichs ist.

8. Gerät nach einem der vorhergehenden Ansprüche, wobei das Kommunikationssystem eine Schnurlostelefonsystem ist, wobei jede der Sendeeinrichtungen (A₁, B₁, C₁) eine Basiseinheit (10) eines betreffenden schnurlosen Telefons ist und jede Empfangseinrichtung (A₂, B₂, C₂) eine Handapparateinheit (20) des betreffenden schnurlosen Telefons ist.

9. Gerät nach Anspruch 8, bei dem das Steuersignal eine Telefonnummer ist, die allein der vorbestimmten Sendeeinrichtung (A₁, B₁, C₁) und Empfangseinrichtung (A₂, B₂, C₂) zugeordnet ist.

10. Gerät nach Anspruch 1, bei dem die Mittel (16, 17, 12) zum Übertragen ein Modulationsmittel (16) enthalten, das mit dem Bestätigungs-Ausgangssignal zum Erzeugen eines modulierten Signals in Reaktion auf das Steuersignal versorgt wird, das eine erste Bandbreite, die im wesentlichen gleich der Gesamtheit des zugewiesenen Bereichs ist, bei Nichtvorliegen des Bestätigungs-Ausgangssignals und eine zweite Bandbreite, die gleich dem zweiten Teil des zugewiesenen Bereichs ist, bei Vorliegen des Bestätigungs-Ausgangssignals hat.

11. Gerät nach Anspruch 10, bei dem der zweite Teil des zugewiesenen Bereichs ein Schmalband-Frequenzbereich innerhalb des zugewiesenen Bereichs ist.

12. Gerät nach Anspruch 10, bei dem das Steuersignal ein binäres Signal ist und bei dem das Modulationsmittel (16) ein Mittel zum Minimalumschalttast-Modulieren eines Referenzsignals in Reaktion auf das Steuersignal enthält.

13. Gerät nach Anspruch 1, bei dem das Mittel (24) zum Herstellen enthält: ein Mittel (23) zum Aufrufen der Übertragungskanäle, um zu erfassen, ob ein Steuersignal darin vorliegt, und um festzustellen, ob ein empfangenes Steuersignal bezeichnend für die Identität der vorbestimmten Sendeeinrichtung ist, und Mittel (24, 26, 27, 22) zum Übertragen eines zweiten Steuersignals, das bezeichnend für das Herstellen des ausgewählten Übertragungskanals ist, über den ausgewählten Übertragungskanal in Reaktion auf die Feststellung.

14. Gerät nach Anspruch 13, bei dem das Mittel (24) zum Herstellen ein Mittel zum Vergleichen des empfangenen Steuersignals mit einem Referenz-Steuersignal enthält.

15. Gerät nach Anspruch 14, bei dem die Mittel (26, 27, 22) zum Bestätigen ein Mittel zum Erfassen des zweiten Steuersignals, das über den ausgewählten Übertragungskanal übertragen ist, enthalten.

16. Kommunikationssystem, das eine Vielzahl von Sendeeinrichtungen (A₁, B₁, C₁) zum Übertragen von Informationssignalen, die Audiosignale enthalten, über einen einer Vielzahl von Übertragungskanälen und ferner eine Vielzahl von Empfangseinrchtungen (A₂, B₂, C₂) zum Empfangen der Informationssignale, die über irgendeinen der Übertragungskanäle übertragen sind, hat, wobei jeder der Übertragungskanäle einen betreffenden Gesamtfrequenzbereich hat, der einen zugewiesenen Bereich zum Übertragen der Audiosignale enthält,
wobei ein Verfahren zum Herstellen eines ausgewählten Übertragungskanals zwischen einer vorbestimmten der Sendeeinrichtungen (A₁, B₁, C₁) und einer vorbestimmten der Empfangseinrichtungen (A₂, B₂, C₂) Schritte umfaßt zum
Auswählen bei der vorbestimmten Sendeeinrichtung (A₁, B₁, C₁) eines der Übertragungskanäle und
Übertragen zumindest eines Steuersignals, das bezeichnend für die Identität der vorbestimmten Sendeeinrichtung (A₁, B₁, C₁) ist, über den ausgewählten Übertragungskanal,
wobei die vorbestimmte Empfangseinrichtung (A₂, B₂, C₂) den ausgewählten Übertragungskanal zwischen sich und der vorbestimmten Sendeeinrichtung (A₁, B₁, C₁) nur in Reaktion auf den Empfang des übertragenen Steuersignals herstellt, das die vorbestimmte Sendeeinrichtung (A₁, B₁, C₁) identifiziert,
**gekennzeichnet** durch weitere Schritte, durch die
die vorbestimmte Sendeeinrichtung (A₁, B₁, C₁) anfänglich das Steuersignal durch Benutzen im wesentlichen der Gesamtheit des zugewiesenen Bereichs des ausgewählten Übertragungskanals überträgt,
die vorbestimmte Empfangseinrichtung (A₂, B₂, C₂) bestätigt, daß der ausgewählte Übertragungskanal mit der vorbestimmten Empfangseinrichtung (A₂, B₂, C₂) hergestellt worden ist, und ein Bestätigungs-Ausgangssignal erzeugt und unter Benutzen im wesentlichen der Gesamtheit des zugewiesenen Bereichs überträgt,
die vorbestimmte Sendeeinrichtung (A₁, B₁, C₁) auf das Bestätigungs-Ausgangssignal durch Übertragen der Audiosignale unter Benutzen eines ersten Teils des zugewiesenen Bereichs reagiert und
die vorbestimmten Sende- u. Empfangseinrichtungen (A₁, A₂, A₃; B₁, B₂, B₃) jeweils Steuersignale zwischen sich unter Benutzen eines zweiten Teils des zugewiesenen Bereichs, der von dem ersten Teil getrennt ist, übertragen, nachdem die Übertragungsstrecke hergestellt worden ist.

## Revendications

1. Un dispositif de transmission de signal destiné à établir un canal de transmission sélectionné entre un émetteur prédéterminé parmi un ensemble d'émetteurs (A₁, B₁, C₁) destinés à transmettre des signaux d'information comprenant des signaux audio sur un canal quelconque parmi un ensemble de canaux de transmission dans un système de télécommunication, et un récepteur prédéterminé parmi un ensemble de récepteurs (A₂, B₂, C₂) qui sont destinés à recevoir les signaux d'information transmis sur n'importe lesquels des canaux de transmission, chacun des canaux de transmission ayant une gamme de fréquence totale respective comprenant une gamme attribuée pour la transmission des signaux audio, ce dispositif comprenant :
des moyens (14) dans l'émetteur prédéterminé (A₁, B₁, C₁) pour sélectionner l'un des canaux de transmission ; et
des moyens (16, 17, 12) pour transmettre au moins un signal de commande représentatif de l'identité de l'émetteur prédéterminé (A₁, B₁, C₁) sur le canal de transmission sélectionné ;
le récepteur prédéterminé (A₂, B₂, C₂) comprenant des moyens (24) qui sont destinés à établir le canal de transmission sélectionné entre lui et l'émetteur prédéterminé (A₁, B₁, C₁), seulement sous l'effet de la réception du signal de commande transmis identifiant l'émetteur prédéterminé (A₁, B₁, C₁) ;
caractérisé en ce que :
les moyens de transmission (16, 17, 12) transmettent initialement le signal de commande en utilisant pratiquement toute la gamme attribuée du canal de transmission sélectionné ;
des moyens (26, 27, 22) sont incorporés dans le récepteur prédéterminé (A₂, B₂, C₂) pour confirmer que le canal de transmission sélectionné a été établi avec le récepteur prédéterminé (A₂, B₂, C₂), et pour générer et transmettre un signal de sortie de confirmation utilisant pratiquement toute la gamme attribuée ;
l'émetteur prédéterminé (A₁, B₁, C₁) réagit au signal de sortie de confirmation en transmettant les signaux audio par l'utilisation d'une première partie de la gamme attribuée ; et
les moyens d'émission (16, 17, 12) et les moyens de confirmation (26, 27, 22) transmettent des signaux de commande entre eux en utilisant une seconde partie de la gamme attribuée, séparée de la première partie, après que la transmission a été établie.

2. Dispositif selon la revendication 1, dans lequel les moyens de sélection (14) comprennent des moyens (13) qui sont destinés à balayer séquentiellement l'ensemble de canaux de transmission et à détecter une intensité de champ électrique reçu dans chaque canal de transmission, ces moyens de sélection (14) sélectionnant un canal de transmission qui a une intensité de champ électrique reçu inférieure à un niveau prédéterminé.

3. Dispositif selon la revendication 1, dans lequel le signal de commande est un code d'identification qui est attribué de façon spécifique à l'émetteur prédéterminé (A₁, B₁, C₁).

4. Dispositif selon la revendication 3, dans lequel les moyens d'établissement (24) comprennent des moyens (26, 27, 22) qui sont destinés à retransmettre un second signal de commande pendant un intervalle prédéterminé, en utilisant pratiquement toute la gamme attribuée.

5. Dispositif selon la revendication 4, dans lequel le second signal de commande est un code d'identification qui est attribué de façon spécifique au récepteur prédéterminé (A₂, B₂, C₂).

6. Dispositif selon la revendication 1, dans lequel la seconde partie de la gamme attribuée pour la transmission du signal de commande à la suite de la confirmation est une gamme de fréquence à bande étroite à l'intérieur de la gamme attribuée.

7. Dispositif selon la revendication 6, dans lequel la seconde partie de la gamme attribuée est une bande de fréquence basse de la gamme attribuée.

8. Dispositif selon l'une quelconque des revendications précédentes, dans lequel le système de télécommunication est un système de téléphone sans fil, chaque émetteur (A₁, B₁, C₁) étant une unité de base (10) d'un téléphone sans fil respectif, et chaque récepteur (A₂, B₂, C₂) étant un combiné (20) du téléphone sans fil respectif.

9. Dispositif selon la revendication 8, dans lequel le signal de commande est un numéro téléphonique qui est attribué de façon spécifique à l'émetteur (A₁, B₁, C₁) et au récepteur (A₂, B₂, C₂) prédéterminés.

10. Dispositif selon la revendication 1, dans lequel les moyens de transmission (16, 17, 12) comprennent des moyens de modulation (16) qui reçoivent le signal de sortie de confirmation pour générer, en réponse au signal de commande, un signal modulé ayant une première largeur de bande pratiquement égale à la totalité de la gamme attribuée, en l'absence du signal de sortie de confirmation, et ayant une seconde largeur de bande égale à la seconde partie précitée de la gamme attribuée, en présence du signal de sortie de confirmation.

11. Dispositif selon la revendication 10, dans lequel la seconde partie de la gamme attribuée est une gamme de fréquence à bande étroite à l'intérieur de la gamme attribuée.

12. Dispositif selon la revendication 10, dans lequel le signal de commande est un signal binaire, et dans lequel les moyens de modulation (16) comprennent des moyens qui sont destinés à moduler un signal de référence, avec une modulation à déplacement minimal, sous la dépendance du signal de commande.

13. Dispositif selon la revendication 1, dans lequel les moyens d'établissement (24) comprennent des moyens (23) qui sont destinés à effectuer une interrogation circulaire des canaux de transmission pour détecter si un signal de commande est présent dans les canaux, et pour déterminer si un signal de commande reçu indique l'identité de l'émetteur prédéterminé, et des moyens (24, 26, 27, 22) qui sont destinés à transmettre sur le canal de transmission sélectionné un second signal de commande indiquant l'établissement du canal de transmission sélectionné, sous l'effet de la détermination précitée.

14. Dispositif selon la revendication 13, dans lequel les moyens d'établissement (24) comprennent des moyens qui sont destinés à comparer le signal de commande reçu avec un signal de commande de référence.

15. Dispositif selon la revendication 14, dans lequel les moyens de confirmation (26, 27, 22) comprennent des moyens qui sont destinés à détecter le second signal de commande transmis sur le canal de transmission sélectionne.

16. Dans un système de télécommunication comportant un ensemble d'émetteurs (A₁, B₁, C₂) prévus pour transmettre des signaux d'information contenant des signaux audio, sur un canal quelconque parmi un ensemble de canaux de transmission, et comportant en outre un ensemble de récepteurs (A₂, B₂, C₂) prévus pour recevoir les signaux d'information transmis sur n'importe lesquels des canaux de transmission, chacun de ces canaux de transmission ayant une gamme de fréquence totale respective qui comprend une gamme attribuée pour la transmission des signaux audio ;
un procédé pour établir un canal de transmission sélectionné entre l'un prédéterminé des émetteurs (A₁, B₁, C₁) et l'un prédéterminé des récepteurs (A₂, B₂, C₂), comprenant les étapes suivantes :
on sélectionne l'un des canaux de transmission dans l'émetteur prédéterminé (A₁, B₁, C₁) ; et
on transmet sur le canal de transmission sélectionné au moins un signal de commande représentatif de l'identité de l'émetteur prédéterminé (A₁, B₁, C₁) ;
le récepteur prédéterminé (A₂, B₂, C₂) établissant le canal de transmission sélectionné entre lui et l'émetteur prédéterminé (A₁, B₁, C₁) seulement sous l'effet de la réception du signal de commande transmis identifiant l'émetteur prédéterminé (A₁, B₁, C₁) ;
caractérisé par les étapes supplémentaires suivantes :
l'émetteur prédéterminé (A₁, B₁, C₁) transmet initialement le signal de commande en utilisant pratiquement toute la gamme attribuée du canal de transmission sélectionné ;
le récepteur prédéterminé (A₂, B₂, C₂) confirme que le canal de transmission sélectionné a été établi avec le récepteur prédéterminé (A₂, B₂, C₂), et il génère et transmet un signal de sortie de confirmation en utilisant pratiquement la totalité de la gamme attribuée ;
l'émetteur prédéterminé (A₁, B₁, C₁) réagit au signal de sortie de confirmation en transmettant les signaux audio en utilisant une première partie de la gamme attribuée ; et
l'émetteur et le récepteur prédéterminés (A₁, A₂, A₃ ; B₁, B₂, B₃) transmettent des signaux de commande entre eux en utilisant une seconde partie de la gamme attribuée, séparée de la première partie, après que la transmission a été établie.
